# EUROPEAN PATENT SPECIFICATION

(11) **EP 3 163 071 B1**
(45) Date of publication and mention of the grant of the patent: **11.12.2019**
(21) Application number: 15382535.1
(22) Date of filing: 29.10.2015
(51) Int. Cl.: F03D 13/20, F03D 13/10, B23P 19/06

(54) **AUTOMATIC TIGHTENING OF BOLTS**
SELBSTSPANNUNG VON BOLZEN
SERRAGE AUTOMATIQUE DE BOULONS

(43) Date of publication of application: 03.05.2017
(73) Proprietor: GE Renewable Technologies Wind B.V., 4817 PA Breda (NL)
(72) Inventor: LÁZARO, Ricardo, 08017 BARCELONA (ES); BATALLA, Aritz, 08907 HOSPITALET DE LLOBREGAT (ES)
(74) Representative: ZBM Patents - Zea, Barlocci & Markvardsen

(56) References cited:
- EP-A1- 2 607 685
- EP-A1- 2 918 969
- EP-A2- 2 199 605
- CN-A- 102 451 994
- US-A1- 2011 232 071
- US-A1- 2014 079 555

## Description

The present disclosure refers to a method of tightening (or tensioning) a bolt in a bolted connection between an outer ring of a pitch bearing and a hub or a blade of a wind turbine, and to a system suitable for performing such a method.

### BACKGROUND

Modern wind turbines are commonly used to supply electricity into the electrical grid. Wind turbines generally comprise a rotor with a rotor hub and a plurality of blades. The rotor is set into rotation under the influence of the wind on the blades. The rotation of a rotor shaft drives a generator rotor either directly ("directly driven") or through the use of a gearbox. The gearbox (if present), the generator and other systems are usually mounted in a nacelle on top of a wind turbine tower.

A wind turbine comprises a diversity of elements that may require inspection and/or maintenance operations to be performed on them. Some or even most of said operations may be mandatory according to national and international regulations. Depending on the design of the wind turbine, at least some of the maintenance operations have to be performed on the outside of the wind turbine, which may imply serious risks for the health of the maintenance staff.

In order to minimize these risks, some wind turbines comprise security elements, such as e.g. protective bars, ladders, ledges, etc. on the outside of the wind turbine. Maintenance operators may also use fasteners, such as e.g. harnesses, in order to avoid dangerous falls from elevated locations.

Blades are generally coupled to the hub with a pitch bearing in between through bolted connections comprising large numbers of bolts that may be accessible only from the outside. Retightening and/or inspections of these external bolts are normally required and therefore undertaken periodically.

These periodic operations may be expensive because they may take a long time and may require the intervention of various operators.

It is an object of the present disclosure to provide methods and systems for tightening (or tensioning) a bolt in a bolted connection between a pitch bearing and a hub or a blade of a wind turbine, said methods and systems at least partially reducing at least one of the aforementioned drawbacks.

### SUMMARY

In a first aspect, a method is provided of tightening a bolt in a bolted connection between an outer ring of a pitch bearing and a hub or a blade of a wind turbine. The pitch bearing is comprised in a pitch system configured to rotate the blade along a longitudinal axis of the blade.

The method comprises mounting a fixed support on the hub or the blade or the outer ring of the pitch bearing, and mounting an automatic tightening tool to the fixed support. The method further comprises positioning the supported automatic tightening tool and the bolt relative to each other in a tightening position of the bolt, and automatically tightening (or tensioning) the bolt by the positioned automatic tightening tool.

Several iterations of positioning the supported automatic tightening tool and automatically tightening the bolt may be performed to (re)tighten a plurality of bolts in the bolted connection.

Herein, it will be understood that the bolt to be tightened (or tensioned) may also be a stud with a nut threaded on the stud.

The suggested method may permit a fully or almost fully automatic (re)tightening of the bolts in the bolted connection without the intervention of human beings at potentially hazardous external positions of the wind turbine. Hence, risky situations for the health of the maintenance personnel are prevented. Moreover, this (re)tightening method may permit reducing the cost of (re)tightening operations, since the need of maintenance staff and execution time may be significantly reduced.

Prior art methods that require the presence of maintenance staff on external points of the wind turbine are subjected to operational restrictions. For example, maintenance tasks can be carried out only in the case that particular weather conditions are met, such as e.g. wind speed below a certain threshold. An additional aspect of the disclosed method is that (re)tightening operations may be undertaken substantially regardless of weather conditions, since no intervention of human beings is required on the exterior of the wind turbine. Document EP2199605 discloses a method and assembly for fastening nuts on a rotor blade bearing of a wind turbine. A screw nut driver assembly is attached on the inner bearing ring and using a pitch operation, the rotor blade bearing nuts can be tightened semi-automatically.

The automatic tightening tool may be removably mounted to the support, such that the same automatic tightening tool may be used to (re)tighten bolted connections of different wind turbines.

In some examples, the fixed support may comprise a guide, and positioning the supported automatic tightening tool and the bolt relative to each other (in the tightening position of the bolt) may be performed by moving the automatic tightening tool along the guide. The guide may be an annular guide, for example.

The annular guide may be mounted to the outer ring of the pitch bearing or, alternatively, to a region of the hub or, further alternatively, to a root region of the blade.

The configuration of the automatic tightening tool may depend on where the bolted connection is arranged and where the annular guide is mounted. For example, if the bolts to be (re)tightened are connecting the outer ring of the pitch bearing to the hub, the automatic tightening tool may be configured based on that a longer distance exists between the guide and the bolts in comparison with the case that the guide is mounted to the outer ring of the pitch bearing. The automatic tightening tool may require in the former case an arm longer than in the latter case, for example.

In some implementations, the automatic tightening tool may be movable along the (e.g. annular) guide based on a rack and pinion system, or a sliding system, or a wheel-based system.

Alternatively to having the guide and the automatic tightening tool movable (by e.g. a drive system) along the guide, the automatic tightening tool may be fixedly mounted to the support. In this case, positioning the supported automatic tightening tool and the bolt relative to each other (in the tightening position of the bolt) may be performed by pitching the blade through the pitch system. An aspect of this configuration is that the guide and the drive system (to move the automatic tightening tool along the guide) are not required, which may make the overall system cheaper.

In some of the examples based on pitching the blade, the bolted connection may be between the outer ring of the pitch bearing and the hub, and the fixed support may be mounted to a root region of the blade. In this case, the operation of the pitch system may cause that the automatic tightening tool is moved with respect to the bolts to be (re)tightened.

Alternatively, the bolted connection may be between the outer ring of the pitch bearing and the blade, and the fixed support may be mounted to a region of the hub. In this case, the operation of the pitch system may cause that the bolts to be (re)tightened are moved with respect to the automatic tightening tool.

In some examples, one or more images of at least part of the bolted connection may be obtained by an image capturing device, such as e.g. a camera.

The automatic tightening tool and the bolt may be positioned relative to each other depending on a result of processing at least some of the obtained images. Alternatively, the angular position of the pitch system or the distance travelled by the automatic tightening tool along the guide may be suitably controlled based on that the position of the bolts and the distance between them are known. Further alternatively, a combination of both approaches may be implemented to provide an increased reliability in positioning the automatic tightening tool and the bolts relative to each other.

The automatic tightening tool may comprise a movable torque wrench. If the bolt is a stud with a nut threaded on the stud, tightening (or tensioning) of the bolt may be performed by pulling up the stud while properly tightening the nut. Hence, the torque wrench may be adapted to tighten (or tension) interchangeably a conventional bolt or a nut threaded on a stud.

Automatically tightening the bolt by the automatic tightening tool may comprise moving the torque wrench so as to reach the bolt depending on a result of processing at least some of the obtained images.

Automatically tightening the bolt by the automatic tightening tool may further comprise applying, by the torque wrench, a rotational torque to the bolt for substantially eliminating an angular distance between a first mark and a second mark. This angular distance may be obtained depending on a result of processing at least some of the obtained images. The first mark may denote a current angular position of the bolt and the second mark may denote a target angular position of the bolt.

Any of the above processing of at least some of the obtained images may be performed by using a computer vision method. Alternatively, said processing may be performed by displaying the images and obtaining input from an operator as a result of a visual inspection performed by the operator. Further alternatively, the computer vision and operator's confirmation approaches may be combined for making the (re)tightening process more reliable.

Alternatively to the camera, signals from optical sensors may be suitably processed for determining the positioning of the automatic tightening tool and the bolt relative to each other, and/or for determining the motion to be caused to the movable torque wrench, and/or for determining the angular distance between first and second marks.

In a second aspect, systems are provided for tightening a bolt in a bolted connection between an outer ring of a pitch bearing and a hub or a blade of a wind turbine, said systems being configured to perform any of the previous methods. The advantages and foundations commented with respect to the proposed tightening methods are also of application to these systems, so no further considerations to this respect will be provided.

### BRIEF DESCRIPTION OF THE DRAWINGS

Non-limiting examples of the present disclosure will be described in the following, with reference to the appended drawings, in which:
Figure 1 is a schematic representation of a region of a wind turbine comprising bolted connections with bolts that may be (re)tightened by examples of the methods and systems disclosed herein.
Figures 2a and 2b are schematic partial cross-sectional views of respective bolted connections between an outer ring of a pitch bearing and a hub and a blade of a wind turbine, and respective examples of a tightening system for tightening bolts in such connections.
Figures 3a and 3b are schematic partial views of a guide and an automatic tightening tool movable along the guide through a wheel-based system according to examples.
Figure 3c is a schematic partial view of an outer ring of a pitch bearing together with a guide and an automatic tightening tool movable along the guide according to examples.
Figure 4a is a schematic perspective view of a platform movable along a guide via a wheel-based system, said platform being a part of an automatic tightening tool according to examples.
Figure 4b is a schematic perspective view of an automatic tightening tool including a platform similar to the one of Figure 4a.
Figure 5a is a schematic perspective view of inner and outer rings of a pitch bearing and a rack and pinion guide through which an automatic tightening tool may be movable along the guide, according to examples.
Figure 5b is an enlarged view of a part of the rack and pinion system of Figure 5a.
Figures 6a and 6b are schematic partial cross-sectional views of respective connections between an outer ring of a pitch bearing and a hub and a blade of a wind turbine, and respective further examples of a tightening system for tightening bolts in said connections.

### DETAILED DESCRIPTION OF EXAMPLES

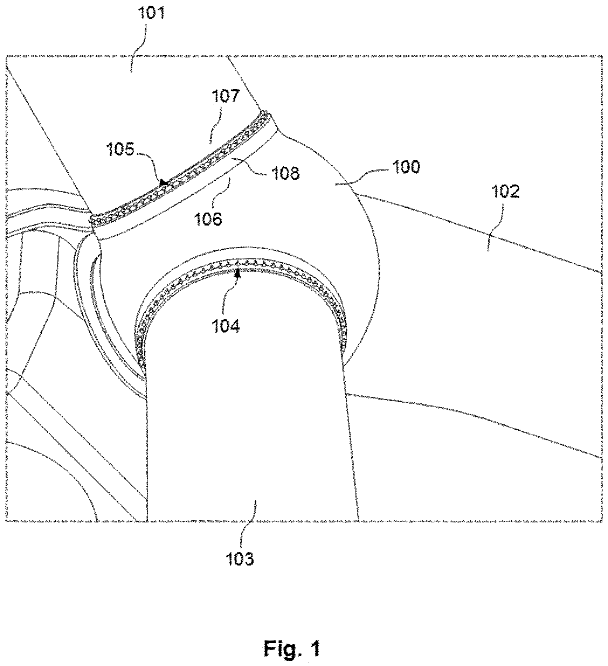

Figure 1 is a schematic representation of a region of an example of a wind turbine comprising bolted connections 104, 105 with bolts that may be (re)tightened by examples of methods and systems disclosed herein. In particular, a hub 100 is shown with three blades 101 - 103 mounted thereto. The bolted connection 104 is shown between hub 100 and blade 103, and the bolted connection 105 is shown between hub 100 and blade 101.

The bolts in both bolted connections 104, 105 have to be inspected and retightened (if necessary) from the outside, which may imply certain risks for the health of the maintenance operators. Examples of a system for (re)tightening or (re)tensioning the bolts, such as e.g. any of the ones discussed in other parts of the description, may be used for automatically (re)tightening the bolts without the need of intervention of human beings at risky positions. Depending on e.g. how the blades 101 - 103 are coupled to the hub 100, the tightening system may be configured to have its automatic tightening tool arranged in the vicinity of the bolts at a hub region 106, or at a pitch bearing region 108, or at a blade root region 107, which will be described with reference to other Figures.

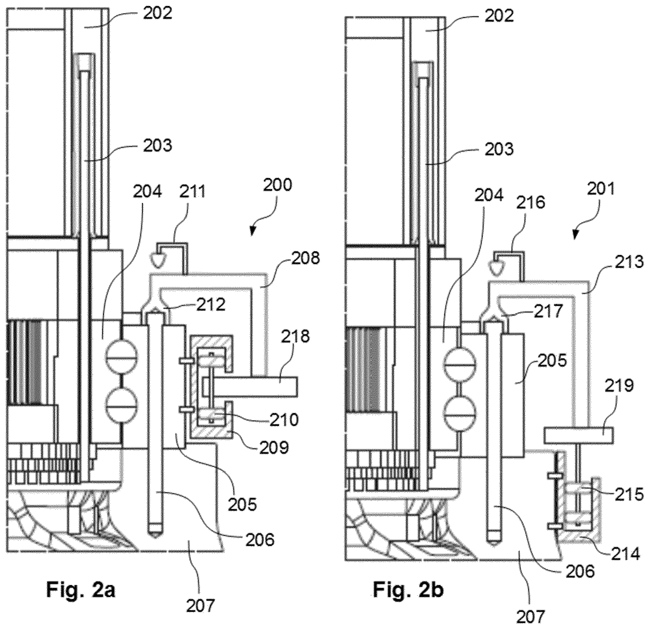

Figures 2a and 2b are schematic partial cross-sectional views of respective connections between a hub 207 and a blade 202 (of a wind turbine) with a pitch bearing 204, 205 in between, and respective examples of a tightening system 200, 201 for tightening bolts 206 in such connections. In both figures, the blade 202 is shown bolted through bolts 203 to an inner ring 204 of the pitch bearing, and an outer ring 205 of the pitch bearing is shown bolted through bolts 206 to the hub 207. It is shown that the head of the bolts 203 are accessible from the inside, so they may be (re)tightened by using a conventional method/device. In contrast, the head of the bolts 206 are accessible only from the outside, so they may be automatically (re)tightened by any of the tightening systems 200, 201 proposed herein.

In both Figures 2a and 2b, the tightening system 200, 201 is shown comprising an automatic tightening tool and a support in the form of guide 209, 214. The automatic tightening tool may comprise a platform 218, 219, an arm 208, 213, a torque wrench 212, 217 and a camera 211, 216. The platform 218, 219 may be coupled to the guide 209, 214 and may have the main function of supporting the arm 208, 213. The torque wrench 212, 217 for (re)tightening or (re)tensioning the bolt(s) 206 may be coupled to an upper end of the arm 208, 213. The automatic tightening tool may be coupled with the guide 209, 214 through a system based on wheels 210, 215 such that the automatic tightening tool is movable along the guide 209, 214. A shaft is shown connecting the wheels 210, 215 of the wheel-based system.

The wheels 210, 215 may be configured to exert a certain pressure/friction to inner surfaces of the guide 209, 214, so that rotation of the wheels causes the motion of the wheel-based system and, hence, of the automatic tightening tool along the guide 209, 214.

In the particular case of Figure 2a, the guide 209 is shown mounted to the outer ring 205 of the pitch bearing and having a lateral opening by which the platform 218 accesses the interior of the guide 209. The shaft between wheels 210 is shown rotatably coupled to an end region of the platform 218 at the inside of the guide 209.

In the particular configuration of Figure 2b, the guide 214 is shown mounted to the hub 207 and having a top opening by which the shaft connecting the wheels 215 overhangs the guide 214. The shaft between wheels 215 is shown rotatably coupled to a bottom region of the platform 219 at the outside of the guide 214.

A dedicated drive (not shown) may be configured to drive the automatic tightening tool along the guide 209, 214 such that the automatic tightening tool may "travel" along the bolted connection 206 from one bolt to another. The torque wrench 212, 217 may be configured to (re)tighten the visited bolts 206 along the path followed by the automatic tightening tool through the guide. The arm 208, 213 may be movable with e.g. longitudinal and rotational degrees of freedom in such a way that the torque wrench 212, 217 may be suitably arranged for applying the required rotational torque to the visited bolts 206.

The camera 211, 216 may be movable and operable so as to obtain one or more images of the bolt 206 and surroundings.

The obtained image(s) may be used to determine the real position of the bolt 206 such that the torque wrench 212, 217 may be moved accordingly. The real position of the bolt 206 may be determined by processing the obtained image(s) by a computer vision method. Alternatively, the real position of the bolt 206 may be determined by displaying the obtained image(s) and obtaining an input from an operator with spatial data resulting from visual inspection by the operator. Further alternatively, the use of a computer vision method and spatial data from an operator may be combined for an increased reliability.

The image(s) may be obtained before or after the application (by the torque wrench 212, 217) of the rotational torque to the bolt 206. When obtained before the application of the rotational torque, the image(s) may be processed (by e.g. a computer vision method) to calculate a rotation amount to be caused to the bolt 206. When obtained after the application of the rotational torque, the image(s) may be processed (by e.g. a computer vision method) to verify that the bolt 206 has been successfully (re)tightened.

In some particular examples, image(s) may be obtained before and after the application of the rotational torque for calculating the rotation amount and confirming the successful (re)tightening, respectively. An aspect of this feature is that the (re)tightening method may be more reliable.

In alternative methods, the obtained image(s) may be displayed on a display for an operator to determine the rotation amount to be caused to the bolt and/or to confirm that the bolt has been successfully (re)tightened. Furthermore, an input from the user may be obtained for generating and sending suitable signals to the automatic tightening tool according to the determined rotation amount and/or the confirmation of successful (re)tightening.

The calculation of the rotation amount and/or the verification of successful (re)tightening may be performed based on a first mark denoting a current angular position of the bolt and a second mark denoting a target angular position of the bolt. The rotation amount may be calculated based on an angular distance between the first and second marks. The confirmation of successful (re)tightening may be determined depending on whether the first and second marks are substantially coincident or aligned, for example.

The first and second marks may be created on the bolt 206 and surroundings once the first or initial tightening of the bolt has been completed according to tightening requirements. Once it is considered that the bolt 206 has been properly tightened for the first time, the first mark and the second mark may be created on the bolt and on its surroundings, respectively, at substantially coincident or aligned positions.

A hydraulic system may be used to perform at least some of the above motion functions. For example, the arm 208, 213 and the torque wrench 212, 217 may be operated based on a hydraulic force produced by such a hydraulic system.

A control unit (not shown) may be configured to generate suitable signals for operating at least some of the above systems or sub-systems (e.g. the drive, the torque wrench 212, 217, the arm 208, 213 the camera, etc.) according to the previously described functionalities.

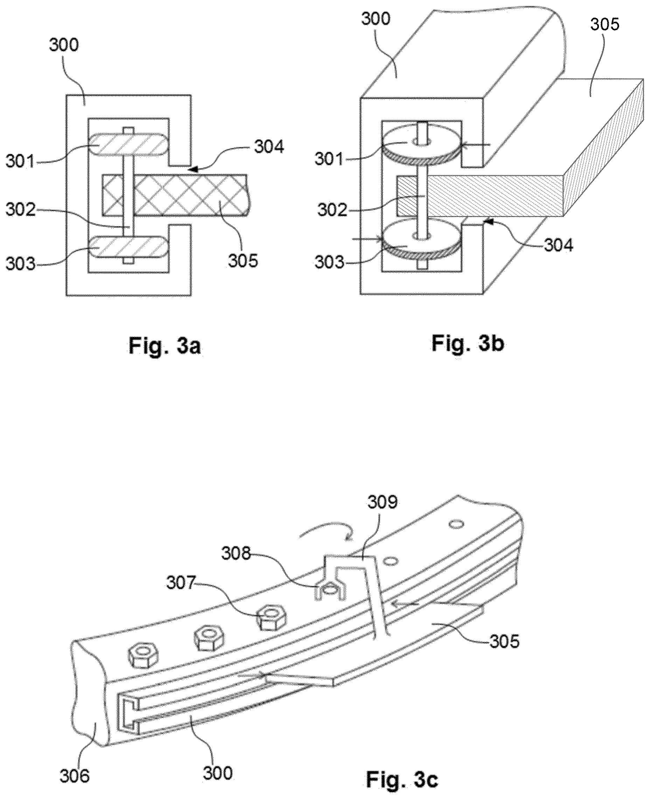

Figures 3a and 3b are schematic partial views of a guide and automatic tightening tool movable along the guide through a wheel-based system according to examples. In particular, Figure 3a shows a schematic cross-sectional view of a guide 300, a support platform 305 and a wheel based system 301 - 303 similar to the guide 209, platform 218 and wheel based system 210 of Figure 2a, respectively. It is shown that the guide 300 may have a lateral opening 304 by which the platform 305 penetrates the interior of the guide 300. Wheels 301, 303 may be connected by a shaft 302, and an end region of the platform 305 may be rotatably coupled to the shaft 302. Figure 3b shows a perspective view of the same configuration of Figure 3a.

Figure 3c is a schematic partial view of an outer ring 306 of a pitch bearing together with a guide 300 and an automatic tightening tool movable along the guide 300, according to examples. Some bolts 307 of a bolted connection are depicted along with an automatic tightening tool that may be used to automatically (re)tighten the bolts 307. The automatic tightening tool is shown with a configuration including a platform 305, arm 309 and torque wrench 308 similar to other configurations described with respect to other Figures (see e.g. Figures 2a, 3a, 3b). The guide 300 may be screwed to the outer ring 306 of the pitch bearing.

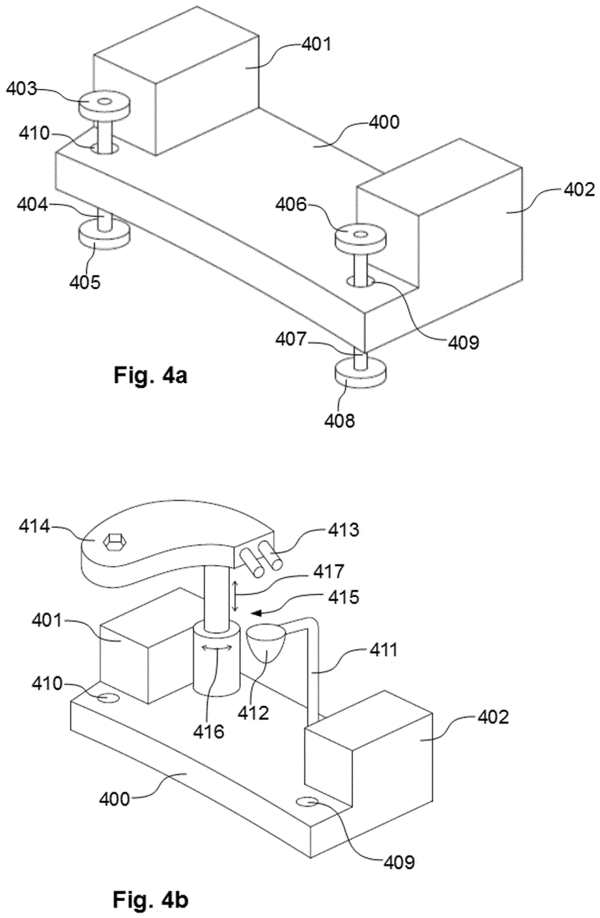

Figure 4a is a schematic perspective view of a platform that may be included in an automatic tightening tool according to examples. The platform may comprise a base 400 and two protruding elements 401, 402 at respective longitudinal ends of the base 400. These elements 401, 402 may have the role of protecting the elements or systems (e.g. camera, torque wrench system, etc.) that may be mounted on the base 400.

A wheel-based system is also shown assembled with the platform. The wheel-based system may comprise first wheels 403, 405 connected by a first shaft 404 and second wheels 406, 408 connected by a second shaft 407. The base 400 may comprise a first hole 410 through which the first shaft 404 may pass in such a way that a rotatable coupling of the first wheels 403, 405 and shaft 404 with the base 400 is implemented. The base 400 may further comprise a second hole 409 through which the second shaft 407 may pass in such a way that a rotatable coupling of the second wheels 406, 408 and shaft 407 with the base 400 is formed.

Figure 4b is a schematic perspective view of an automatic tightening tool including a platform 400 similar to the one of Figure 4a. In this example, a camera 412 with supporting arm 411 and a torque wrench system 415 are mounted on the base 400. The camera 412 with arm 411 and the torque wrench system 415 may be configured in the same or similar way as described with respect to at least some of the previous Figures. The torque wrench system 415 may comprise a wrench end 414 with an opening shaped and sized in such a way that a bolt head fits therein, and may be configured with a longitudinal degree of freedom 417 and a rotational degree of freedom 416. Hydraulic connections 413 may have the function of transmitting a hydraulic force to cause a motion in the rotational and/or longitudinal degree of freedom 416, 417. Hydraulic force may also be transmitted to the wrench end 414 to produce corresponding rotational torque.

Once the automatic tightening tool has been positioned in the vicinity of a bolt to be (re)tightened, a motion in the rotational and/or longitudinal degrees of freedom 416, 417 may be provoked so as to cause the fitting of the bolt head in the opening of the wrench end 414. Once said fitting has been achieved, the wrench end 414 may be (hydraulically) driven to exert a required rotational torque to the bolt head aimed at successfully (re)tightening or (re)tensioning the bolt.

The required rotational torque to be exerted may be calculated in advance from an image of the bolt and surroundings taken by the camera 412. A first mark on the bolt head and a second mark on the surroundings of the bolt head may be used as a reference to calculate an angular distance between them. The first mark may denote a current angular position of the bolt, and the second mark may denote a target angular position of the bolt. The angular distance between the first and second marks may be calculated automatically by using a computer vision method, or may be calculated non-automatically by an operator by visually inspecting the image, or may be calculated by combining both automatic and non-automatic approaches. The calculated angular distance between the first and second marks may be used to determine the rotational torque to be applied to the bolt.

Alternatively, a predefined torque may be applied and, afterwards, a verification of whether the bolt has been successfully (re)tightened may be performed from an image taken by the camera 412, according to e.g. the above principles based on first and second marks. Several iterations of exerting a predefined torque and verifying whether the bolt has been correctly (re)tightened may be performed until such verification produces a positive result. Further alternatively, a combination of both approaches, i.e. taking an image before and after the application of the rotational torque, may be used.

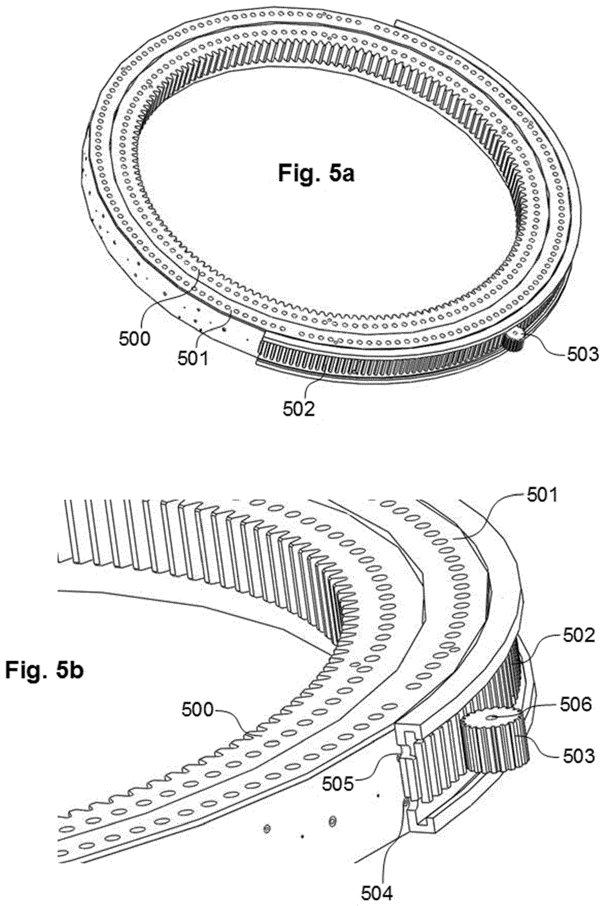

Figure 5a is a schematic perspective view of inner and outer rings 500, 501 of a pitch bearing and a guide in the form of rack and pinion system 502, 503 through which an automatic tightening tool may be movable along a guide, according to examples. Figure 5b is an enlarged view of a part of the rack and pinion system of Figure 5a. A circular gear or pinion 503 may engage teeth on an annular or semi-annular gear bar or rack 502. Rotational motion applied to the pinion 503 causes the pinion 503 to move relative to the rack 502, thereby translating the rotational motion of the pinion 503 into a displacement of the pinion 503 along the rack 502.

For the sake of simplicity, Figure 5a shows a semi-annular rack 502 mounted to an outer surface of the outer ring 501 of the pitch bearing, and a single pinion 503. However, two semi-annular racks equal or similar to the rack 502, or more than two annular rack segments may be mounted to the outer surface of the outer ring 501 of the pitch bearing to form a complete annular rack. A plurality of pinions 503 may be used to form a more reliable rack and pinion system.

A configuration similar to e.g. the wheel-based system of Figure 4a could be formed according to rack and pinion (or teeth engagement) approach instead of wheels exerting pressure/friction to inner walls of a compatible guide. A tightening system could therefore comprise a rack and pinion system having two first pinions connected by a first shaft and two second pinions connected by second shaft. First and second pinions may be connected by first and second shaft, respectively, at corresponding connection points 506.

Similarly to the proposal of Figure 4a, the first and second assemblies of pinions and shaft may be rotatably coupled to a support base with the shafts passing through corresponding holes of the support base. The rack guide 502 may be screwed to the outer ring 501 of the pitch bearing at corresponding screw holes 504, 505.

The automatic tightening tool may be self-propelled, and a recovery system may be configured to recover the automatic tightening tool in case of self-propelling malfunction. The recovery system may comprise a cable configured to be pulled so as to drag the automatic tightening tool to a position at which the automatic tightening tool is accessible by an operator.

In any of the examples based on a guide and an automatic tightening tool movable along the guide, the automatic tightening tool may be propelled by e.g. electrical motors powered by batteries or supplied through wires.

A cleaning tool may be configured to clean the guide. This cleaning tool may comprise e.g. brushes and/or similar elements, and may be operable so as to clean the guide automatically, for example. Control signals from a control unit may be provided to the cleaning tool aimed at that purpose. Alternatively, the cleaning tool may comprise a cable configured to be pulled so as to drag the brushes along the guide.

The guide may be permanently coupled to the hub, or to the outer ring of the pitch bearing, or to the blade root, and may be made of aluminium in order to avoid its oxidation.

When the guide is a rack guide (of a rack and pinion system), the automatic tightening tool may include a lubrication system configured to lubricate the rack guide (when required) during the motion of the tightening tool along the rack.

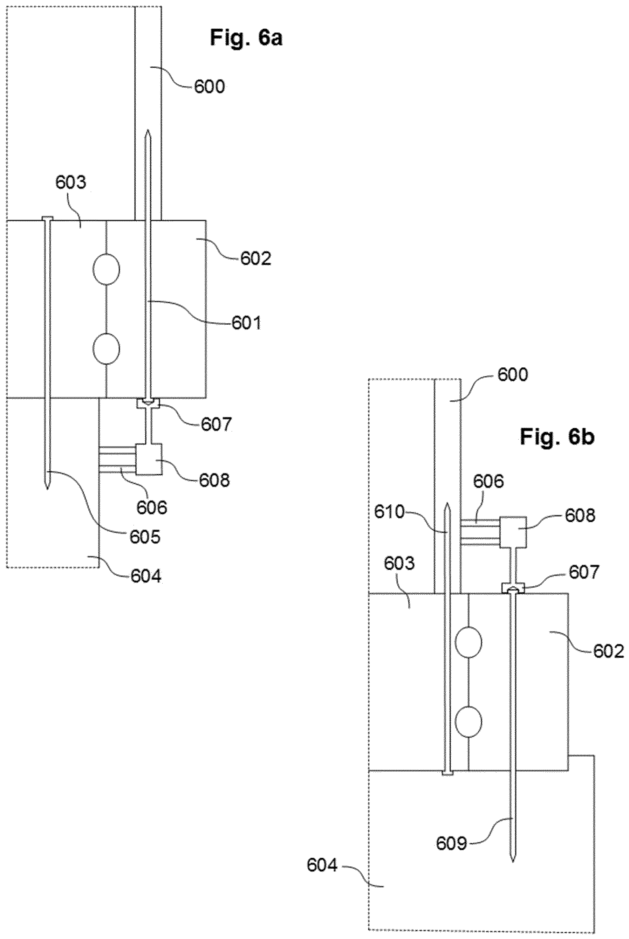

Figures 6a and 6b are schematic partial cross-sectional views of respective connections between a hub 604 and a blade 600 (of a wind turbine) with a pitch bearing 602, 603 in between, and respective further examples of a tightening system for tightening bolts 601, 609 in such connections.

According to Figure 6a, the blade 600 and an outer ring 602 of a pitch bearing may be coupled to each other through bolts 601 whose head is accessible from the outside. Also, an inner ring 603 of the pitch bearing may be coupled to the hub 604 through bolts 605 that are not accessible from the outside. Taking this particular hub-blade configuration into account, an automatic tightening tool 608 with a torque wrench 607 may be fixedly (i.e. non-movably) coupled to the hub through a suitable support 606. A pitch system of the blade 600 (comprising the pitch bearing 602, 603) may be operated in such a way that the bolts 601 may be positioned within reach of the automatic tightening tool 607, 608. When a bolt 601 is within reach of the automatic tightening tool 607, 608, it may be operated to automatically (re)tighten the bolt 601.

According to Figure 6b, the blade 600 and an inner ring 603 of a pitch bearing may be coupled to each other through bolts 610 whose head is not accessible from the outside. Also, an outer ring 602 of the pitch bearing may be coupled to the hub 604 through bolts 609 that are accessible from the outside. Taking this particular hub-blade configuration into account, an automatic tightening tool 608 with a torque wrench 607 may be fixedly (i.e. non-movably) coupled to the blade 600 through a suitable support 606. A pitch system of the blade 600 (comprising the pitch bearing 602, 603) may be operated in such a way that the automatic tightening tool 607, 608 is moved along the bolts 609 that connect the outer ring 602 of the pitch bearing and the hub 604. When a bolt 609 is within reach of the automatic tightening tool 607, 608, it may be operated to automatically (re)tighten the bolt 609.

In any of the Figures 6a and 6b, the automatic tightening system 607, 608 may further comprise a camera (not shown) aimed at capturing one or more images of the bolt to be (re)tightened and its surroundings. Similar considerations to those made with respect to the camera of e.g. Figures 2a and 2b may be of application to the examples of Figures 6a and 6b. The torque wrench 607 may be movable through an associated arm in a similar way as described with reference to e.g. Figures 2a and 2b. Mobility functions of e.g. the camera, the torque wrench 607, etc. may be implemented by a hydraulic system similar to the one described with reference to Figures 2a and 2b, for example. A control unit (not shown) may be configured to generate control signals to suitably operate the camera, the torque wrench 607 and associated arm, etc., for example. The control unit may be configured (programmed) to cooperate with the pitch system of the wind turbine according to described functionalities based on pitching the blade.

In any of the disclosed examples, the (re)tightening tool may comprise a reaction arm configured to react against a fixed/rigid element (e.g. neighbouring bolts) for supporting the torque during (re)tightening. However, in alternative examples, this function could be performed by braking the wheels, pinions, etc. in configurations that comprise a guide and a movable coupling of the tightening tool with the guide.

The automatic tightening tool may be configured to be reasonably light (with e.g. a weight of between 15 and 20 Kg) to facilitate the carrying of the tool by an operator and its coupling to the support (e.g. guide). In particular examples, the automatic tightening tool may be designed and fabricated as a kit of mountable parts (e.g. main body, torque tool, wheels, shafts, etc.). An aspect of this feature may be that carrying of the automatic tightening tool by an operator is facilitated, because lighter pieces may be separately carried to the location of the support (e.g. guide) and mounted thereat.

The scope of the present disclosure should not be limited by particular examples, but should be determined only by a fair reading of the claims that follow.

## Claims

1. A method of tightening a bolt in a bolted connection (104, 105) between an outer ring (205; 306; 501; 602) of a pitch bearing and a hub (100; 207; 604) or a blade (101 - 103; 202; 600) of a wind turbine, wherein the pitch bearing is comprised in a pitch system configured to rotate the blade along a longitudinal axis of the blade; the method comprising
mounting a fixed support (209, 214; 300, 305; 400; 502, 503; 606) on the hub or the blade, or on the outer ring of the pitch bearing in which case said mounting comprises mounting a guide (209; 214; 300; 502) on the outer ring of the pitch bearing;
mounting an automatic tightening tool (208, 212; 213, 217; 308, 309; 405; 607, 608) to the fixed support;
positioning the supported automatic tightening tool and the bolt relative to each other in a tightening position of the bolt, wherein if the fixed support has been mounted on the outer ring of the pitch bearing, said positioning is performed by moving the automatic tightening tool along the guide (209; 214; 300; 502); and
automatically tightening the bolt by the positioned automatic tightening tool.

2. A method according to claim 1, wherein the automatic tightening tool is fixedly mounted to the support; and wherein
positioning the supported automatic tightening tool and the bolt relative to each other in the tightening position of the bolt is performed by pitching the blade through the pitch system.

3. A method according to claim 2, wherein the bolted connection is between the outer ring (602) of the pitch bearing and the hub (604); and wherein the fixed support (606) is mounted to a root region of the blade (600).

4. A method according to claim 2, wherein the bolted connection is between the outer ring (602) of the pitch bearing and the blade (600); and wherein the fixed support is mounted to a hub region (604).

5. A method according to claim 1, wherein the fixed support comprises a guide (209; 214; 300; 502); and wherein positioning the supported automatic tightening tool and the bolt relative to each other in the tightening position of the bolt is performed by moving the automatic tightening tool along the guide (209; 214; 300; 502).

6. A method according to any of claims 1 to 5, further comprising obtaining, by an image capturing device (211; 216; 412), one or more images of at least part of the bolted connection.

7. A method according to claim 6, wherein the automatic tightening tool and the bolt are positioned relative to each other depending on a result of processing at least some of the obtained images.

8. A method according to any of claims 6 or 7, wherein the automatic tightening tool comprises a movable torque wrench (212; 217); and wherein
automatically tightening the bolt by the automatic tightening tool comprises moving the torque wrench (212; 217) so as to reach the bolt depending on a result of processing at least some of the obtained images.

9. A method according to claim 8, wherein automatically tightening the bolt by the automatic tightening tool comprises
applying, by the torque wrench, a rotational torque to the bolt for substantially eliminating an angular distance between a first mark and a second mark depending on a result of processing at least some of the obtained images; wherein
the first mark denotes a current angular position of the bolt and the second mark denotes a target angular position of the bolt.

10. A system for tightening a bolt in a bolted connection (104, 105) between an outer ring (205; 306; 501; 602) of a pitch bearing and a hub (100; 207; 604) or a blade (101 - 103; 202; 600) of a wind turbine, wherein the pitch bearing is comprised in a pitch system configured to rotate the blade along a longitudinal axis of the blade; the system comprising
a fixed support (209, 214; 300, 305; 400; 502, 503; 606) configured to be mounted on the hub or the blade, or on the outer ring of the pitch bearing in which case the fixed support comprises a guide (209; 214; 300; 502) mountable on the outer ring of the pitch bearing;
an automatic tightening tool (208, 212; 213, 217; 308, 309; 405; 607, 608) configured to be mounted to the fixed support and configured to automatically tightening the bolt; and
a positioner system configured to position the automatic tightening tool and the bolt relative to each other in a tightening position of the bolt, wherein if the fixed support is mountable on the outer ring of the pitch bearing, said positioner system is configured to perform said positioning by moving the automatic tightening tool along the guide (209; 214; 300; 502).

11. A system according to claim 10, wherein the automatic tightening tool comprises a movable torque wrench (212; 217).

12. A system according to any of claims 10 or 11, wherein the automatic tightening tool is configured to be fixedly mounted to the fixed support; and wherein the positioner system comprises the pitch system.

13. A system according to any of claims 10 or 11, wherein the fixed support comprises an annular guide (209; 214; 300; 502) configured to be mounted to the outer ring of the pitch bearing, or to the hub, or to a root region of the blade.

14. A system according to claim 13, wherein the automatic tightening tool is movable along the guide based on one of: a rack and pinion system (502, 503), a sliding system (300, 305), and a wheel-based system (209, 210; 214, 215; 300 - 303; 403-410).

15. A system according to any of claims 13 or 14, wherein the automatic tightening tool is self-propelled, and a recovery system is configured to recover the automatic tightening tool in case of self-propelling malfunction; and wherein
the recovery system comprises a cable configured to be pulled so as to drag the automatic tightening tool to a position at which the automatic tightening tool is accessible by an operator.

## Patentansprüche

1. Ein Verfahren zum Festziehen eines Bolzens in einer Schraubverbindung (104, 105) zwischen einem äußeren Ring (205; 306; 501; 602) von einem Pitchlager und einer Nabe (100; 207; 604) oder einem Blatt (101 - 103; 202; 600) von einer Windturbine, wobei das Pitchlager in einem Blattverstellsystem enthalten ist, das konfiguriert ist, um das Blatt entlang einer Längsachse des Blattes zu drehen; wobei das Verfahren folgendes umfasst:
das Montieren von einem fixierten Stützkörper (209, 214; 300, 305; 400; 502, 503; 606) auf der Nabe oder dem Blatt, oder auf dem äußeren Ring des Pitchlagers, in welchem Fall die Montage das Montieren von einer Führung (209; 214; 300; 502) auf dem äußeren Ring des Pitchlagers umfasst;
das Montieren von einem automatischen Festziehwerkzeug (208, 212; 213, 217; 308, 309; 405; 607, 608) an dem fixierten Stützkörper;
das Positionieren von dem gestützten automatischen Festziehwerkzeug und des Bolzens bezüglich einander in einer Festziehposition des Bolzens, wobei, falls der fixierte Stützkörper auf dem äußeren Ring des Pitchlagers montiert worden ist, das Positionieren durchgeführt wird, indem das automatische Festziehwerkzeug entlang der Führung (209; 214; 300; 502) bewogen wird; und
das automatische Festziehen des Bolzens mittels des positionierten automatischen Festziehwerkzeugs.

2. Ein Verfahren nach Anspruch 1, wobei das automatische Festziehwerkzeug an dem Stützkörper befestigt wird; und wobei
die Positionierung des gestützten automatischen Festziehwerkzeugs und des Bolzens bezüglich einander in der Festziehposition des Bolzens durchgeführt wird, in dem das Blatt mittels des Blattverstellsystems verstellt wird.

3. Ein Verfahren nach Anspruch 2, wobei die Schraubverbindung zwischen dem äußeren Ring (602) des Pitchlagers und der Nabe (604) ist; und wobei der fixierte Stützkörper (606) an einem Wurzelbereich des Blattes (600) befestigt wird.

4. Ein Verfahren nach Anspruch 2, wobei die Schraubverbindung zwischen dem äußeren Ring (602) des Pitchlagers und dem Blatt (600) ist; und wobei der fixierte Stützkörper an einem Nabebereich (604) befestigt wird.

5. Ein Verfahren nach Anspruch 1, wobei der fixierte Stützkörper eine Führung (209; 214; 300; 502) umfasst; und wobei die Positionierung des gestützten automatischen Festziehwerkzeugs und des Bolzens bezüglich einander in der Festziehposition des Bolzens durchgeführt wird, indem das automatische Festziehwerkzeug entlang der Führung (209; 214; 300; 502) bewogen wird.

6. Ein Verfahren nach einem der Ansprüche 1 bis 5, weiterhin umfassend das Erhalten, mittels einer Bilderfassungsvorrichtung (211; 216; 412), von einem oder mehreren Bildern von mindestens einem Teil der Schraubverbindung.

7. Ein Verfahren nach Anspruch 6, wobei das automatische Festziehwerkzeug und der Bolzen bezüglich einander in Abhängigkeit von einem Ergebnis der Bearbeitung von mindestens einigen von den erhaltenen Bildern positioniert werden.

8. Ein Verfahren nach einem der Ansprüche 6 oder 7, wobei das automatischen Festziehwerkzeug einen beweglichen Drehmomentschlüssel (212; 217) umfasst; und wobei
das automatische Festziehen des Bolzens mit dem automatischen Festziehwerkzeug das Bewegen des Drehmomentschlüssels (212; 217) umfasst, um den Bolzen in Abhängigkeit von einem Ergebnis der Bearbeitung von mindestens einigen von den erhaltenen Bildern zu erreichen.

9. Ein Verfahren nach Anspruch 8, wobei das automatische Festziehen des Bolzens mit dem automatischen Festziehwerkzeug folgendes umfasst:
das Anwenden, mittels des Drehmomentschlüssels, von einem Drehmoment auf den Bolzen, um einen Winkelabstand zwischen einer ersten Markierung und einer zweiten Markierung in Abhängigkeit von einem Ergebnis der Bearbeitung von mindestens einigen von den erhaltenen Bildern zu entfernen; wobei
die erste Markierung eine momentane Winkelposition des Bolzens kennzeichnet und die zweite Markierung eine Zielwinkelposition des Bolzens kennzeichnet.

10. Ein System zum Festziehen von einem Bolzen in einer Schraubverbindung (104, 105) zwischen einem äußeren Ring (205; 306; 501; 602) von einem Pitchlager und einer Nabe (100; 207; 604) oder einem Blatt (101 - 103; 202; 600) von einer Windturbine, wobei das Pitchlager in einem Blattverstellsystem enthalten ist, das konfiguriert ist, um das Blatt entlang einer Längsachse des Blattes zu drehen; wobei das System folgendes umfasst:
einen fixierten Stützkörper (209, 214; 300, 305; 400; 502, 503; 606), der konfiguriert ist, um auf der Nabe oder dem Blatt, oder auf dem äußeren Ring des Pitchlagers montiert zu werden, in welchem Fall der fixierte Stützkörper eine Führung (209; 214; 300; 502) umfasst, die auf dem äußeren Ring des Pitchlagers montiert werden kann;
ein automatisches Festziehwerkzeug (208, 212; 213, 217; 308, 309; 405; 607, 608), das konfiguriert ist, um an dem fixierten Stützkörper befestigt zu werden und das konfiguriert ist, um den Bolzen automatisch festzuziehen; und
ein Positioniersystem, das konfiguriert ist, um das automatische Festziehwerkzeug und den Bolzen bezüglich einander in einer Festziehposition des Bolzens zu positionieren, wobei, falls der fixierte Stützkörper auf dem äußeren Ring des Pitchlagers montiert werden kann, das Positioniersystem konfiguriert ist, um die Positionierung durchzuführen, indem das automatische Festziehwerkzeug entlang der Führung (209; 214; 300; 502) bewogen wird.

11. Ein System nach Anspruch 10, wobei das automatischen Festziehwerkzeug einen beweglichen Drehmomentschlüssel (212; 217) umfasst.

12. Ein System nach einem der Ansprüche 10 oder 11, wobei das automatische Festziehwerkzeug konfiguriert ist, um an dem fixierten Stützkörper befestigt zu werden; und wobei das Positioniersystem das Blattverstellsystem umfasst.

13. Ein System nach einem der Ansprüche 10 oder 11, wobei der fixierte Stützkörper eine ringförmige Führung (209; 214; 300; 502) umfasst, die konfiguriert ist, um an dem äußeren Ring des Pitchlagers, oder an der Nabe, oder an einem Wurzelbereich des Blattes befestigt zu werden.

14. Ein System nach Anspruch 13, wobei das automatische Festziehwerkzeug entlang der Führung beruhend auf einem von: einem Ritzel-Zahnstange-System (502, 503), einem Verschiebungssystem (300, 305) und einem auf einem Rad basierenden System (209, 210; 214, 215; 300 - 303; 403 - 410) bewogen werden kann.

15. Ein System nach einem der Ansprüche 13 oder 14, wobei das automatische Festziehwerkzeug mit Eigenantrieb versehen ist und ein Rückgewinnungssystem konfiguriert ist, um das automatische Festziehwerkzeug im Falle von einer Funktionsstörung des Eigenantriebs zurückzugewinnen; und wobei
das Rückgewinnungssystem ein Kabel umfasst, das konfiguriert ist, um gezogen zu werden, um das automatische Festziehwerkzeug bis zu einer Position zu schleppen, in der das automatische Festziehwerkzeug durch eine Bedienperson erreicht werden kann.

## Revendications

1. Un procédé de serrage d'un boulon dans un raccord boulonné (104, 105) entre une bague extérieure (205 ; 306 ; 501 ; 602) d'un palier de régulation de pas et un moyeu (100 ; 207 ; 604) ou une pale (101 - 103 ; 202 ; 600) d'une éolienne, dans lequel le palier de régulation de pas est compris dans un système de réglage de pas de pale configuré pour faire pivoter la pale autour d'un axe longitudinal de la pale ; le procédé comprenant
monter un support fixé (209, 214 ; 300, 305 ; 400 ; 502, 503 ; 606) sur le moyeu ou la pale, ou sur la bague extérieure du palier de régulation de pas, auquel cas ledit montage comprend monter une guide (209 ; 214 ; 300 ; 502) sur la bague extérieure du palier de régulation de pas ;
attacher un outil de serrage automatique (208, 212 ; 213, 217 ; 308, 309 ; 405 ; 607, 608) au support fixé ;
positionner l'outil de serrage automatique supporté et le boulon l'un par rapport à l'autre dans une position de serrage du boulon, dans lequel si le support fixé a été monté sur la bague extérieure du palier de régulation de pas, ledit positionnement est effectué en déplaçant l'outil de serrage automatique le long de la guide (209 ; 214 ; 300 ; 502) ; et
serrer automatiquement le boulon moyennant l'outil de serrage automatique positionné.

2. Un procédé selon la revendication 1, dans lequel l'outil de serrage automatique est attaché de manière fixe au support ; et dans lequel
le positionnement de l'outil de serrage automatique supporté et le boulon l'un par rapport à l'autre dans la position de serrage du boulon est effectué en réglant le pas de pale moyennant le système de réglage de pas de pale.

3. Un procédé selon la revendication 2, dans lequel le raccord boulonné est situé entre la bague extérieure (602) du palier de régulation de pas et le moyeu (604) ; et dans lequel le support fixé (606) est attaché à une région de racine de la pale (600).

4. Un procédé selon la revendication 2, dans lequel le raccord boulonné est situé entre la bague extérieure (602) du palier de régulation de pas et la pale (600) ; et dans lequel le support fixé est attaché à une région (604) de moyeu.

5. Un procédé selon la revendication 1, dans lequel le support fixé comprend une guide (209 ; 214 ; 300 ; 502) ; et dans lequel le positionnement de l'outil de serrage automatique supporté et du boulon l'un par rapport à l'autre dans la position de serrage du boulon est effectué en déplaçant l'outil de serrage automatique le long de la guide (209 ; 214 ; 300 ; 502).

6. Un procédé selon l'une quelconque des revendications 1 à 5, comprenant en outre obtenir, moyennant un dispositif de capture d'images (211 ; 216 ; 412) une ou plusieurs images d'au moins une partie du raccord boulonné.

7. Un procédé selon la revendication 6, dans lequel l'outil de serrage automatique et le boulon sont situés l'un par rapport à l'autre en fonction d'un résultat de traitement d'au moins quelques-unes des images obtenues.

8. Un procédé selon l'une quelconque des revendications 6 ou 7, dans lequel l'outil de serrage automatique comprend une clé dynamométrique (212 ; 217) déplaçable ; et dans lequel
le serrage automatique du boulon par l'outil de serrage automatique comprend déplacer la clé dynamométrique (212 ; 217) afin d'atteindre le boulon en fonction d'un résultat du traitement d'au moins quelques-unes des images obtenues.

9. Un procédé selon la revendication 8, dans lequel le serrage automatique du boulon moyennant l'outil de serrage automatique comprend
appliquer, moyennant la clé dynamométrique, un moment de rotation au boulon pour éliminer essentiellement une distance angulaire entre un premier marquage et un second marquage en fonction d'un résultat du traitement d'au moins quelques-unes des images obtenues ; dans lequel
le premier marquage indique une position angulaire actuelle du boulon et le second marquage indique une position angulaire cible du boulon.

10. Un système de serrage d'un boulon dans un raccord boulonné (104, 105) entre une bague extérieure (205 ; 306 ; 501 ; 602) d'un palier de régulation de pas et un moyeu (100 ; 207 ; 604) ou une pale (101 - 103 ; 202 ; 600) d'une éolienne, dans lequel le palier de régulation de pas est compris dans un système de réglage de pas de pale configuré pour faire pivoter la pale autour d'un axe longitudinal de la pale ; le système comprenant
un support fixé (209, 214 ; 300, 305 ; 400 ; 502, 503 ; 606) configuré de façon à être monté sur le moyeu ou la pale, ou sur la bague extérieure du palier de régulation de pas, auquel cas le support fixé comprend une guide (209 ; 214 ; 300 ; 502) pouvant être montée sur la bague extérieure du palier de régulation de pas ;
un outil de serrage automatique (208, 212 ; 213, 217 ; 308, 309 ; 405 ; 607, 608) configuré de façon à être attaché au support fixé et configuré pour serrer automatiquement le boulon ; et
un système de positionnement configuré pour positionner l'outil de serrage automatique et le boulon l'un par rapport à l'autre dans une position de serrage du boulon, dans lequel si le support fixé peut être monté sur la bague extérieure du palier de régulation de pas, ledit système de positionnement est configuré de façon à effectuer ledit positionnement en déplaçant l'outil de serrage automatique le long de la guide (209 ; 214 ; 300 ; 502).

11. Un système selon la revendication 10, dans lequel l'outil de serrage automatique comprend une clé dynamométrique (212 ; 217) déplaçable.

12. Un système selon l'une quelconque des revendications 10 ou 11, dans lequel l'outil de serrage automatique est configuré de façon à être attaché de manière fixe au support fixé ; et dans lequel le système de positionnement comprend le système de réglage de pas de pale.

13. Un système selon l'une quelconque des revendications 10 ou 11, dans lequel le support fixé comprend une guide annulaire (209 ; 214 ; 300 ; 502) configurée pour être attachée à la bague extérieure du palier de régulation de pas, ou au moyeu, ou à une région de racine de la pale.

14. Un système selon la revendication 13, dans lequel l'outil de serrage automatique peut être déplacé le long de la guide sur la base d'un parmi : un système de type pignon-crémaillère (502, 503), un système coulissant (300, 305), et un système à base de roue (209, 210 ; 214, 215 ; 300 - 303 ; 403 - 410).

15. Un système selon l'une quelconque des revendications 13 ou 14, dans lequel l'outil de serrage automatique est un outil automoteur, et un système de récupération est configuré pour récupérer l'outil de serrage automatique en cas d'un mauvais fonctionnement de la fonction automotrice ; et dans lequel
le système de récupération comprend un câble configuré pour être tiré de façon à traîner l'outil de serrage automatique jusqu'à une position dans laquelle l'outil de serrage automatique est accessible à un opérateur.
